Europäisches Patentamt

European Patent Office

Office européen des brevets

(19)

(11) Numéro de publication : **0 458 686 A1**

(12)

# DEMANDE DE BREVET EUROPEEN

(21) Numéro de dépôt : **91401282.8**

(51) Int. Cl.⁵ : **B25J 9/02, B23Q 1/18**

(22) Date de dépôt : **17.05.91**

(30) Priorité : **23.05.90 FR 9006445**

(43) Date de publication de la demande :
**27.11.91 Bulletin 91/48**

(84) Etats contractants désignés :
**BE DE ES GB IT NL SE**

(71) Demandeur : **RENAULT AUTOMATION**
**8/10 avenue Emile Zola**
**F-92109 Boulogne-Billancourt (FR)**

(72) Inventeur : **Caron, René**
**20 rue de Neuilly**
**F-921010 Clichy (FR)**

(74) Mandataire : **Robert, Jean-Pierre et al**
**CABINET BOETTCHER 23, rue la Boétie**
**F-75008 Paris (FR)**

(54) Dispositif de déplacement d'un mobile selon trois axes.

(57) Le dispositif comporte un bâti (1) présentant deux guides (3) parallèles horizontaux, sur lesquels sont montées à coulissement les extrémités d'une traverse mobile (4) le long de ces guides horizontaux (mouvement x), un chariot (9) monté coulissant le long de la traverse (mouvement y) et un coulisseau (11) monté coulissant dans le chariot (9), perpendiculairement à la dimension longitudinale de la traverse (4), la traverse comportant deux poutres parallèles (5a,5b) à axes d'inertie (6a,6b) décalés.

EP 0 458 686 A1

Jouve, 18, rue Saint-Denis, 75001 PARIS

FIG_1

La présente invention concerne un dispositif pour déplacer un outil d'usinage de manutention ou autre, selon au moins trois directions orthogonales de l'espace.

On rencontre ce type d'appareil dans de nombreux domaines. Ils comprennent par exemple les robots à portique, les portiques de manutention, les ponts roulants...Dans les dispositifs de ce genre, pour assurer et guider ces trois déplacements, l'outil est porté par un coulisseau ou un cable mobile selon l'axe vertical z dans un chariot, lui-même mobile selon l'axe horizontal y le long d'une traverse qui peut être déplacée, parallèlement à elle-même et perpendiculairement à sa longueur, le long de deux guides parallèles horizontaux, selon l'axe x, ces guides étant portés par une structure fixe.

Les caractéristiques dynamiques d'un tel dispositif (vitesse, accélération) sont directement liées à la masse des solides en mouvement, c'est-à-dire à la masse de la traverse, du chariot, du coulisseau et de l'outil. Par ailleurs, la précision des déplacements et des opérations réalisées par le dispositif (que ce soit en usinage ou en montage), dépend de la raideur de cet équipage mobile, et plus particulièrement de celle de la traverse, particulièrement en ce qui concerne son comportement en torsion. En effet, les masses liées au chariot mobile sur la traverse peuvent avoir leur centre de gravité très éloigné de l'axe d'inertie de la traverse et donc engendrer un couple important sur cette dernière lors de ses accélérations et décélérations.

Or, augmenter la raideur d'une telle traverse, notamment en ce qui concerne la torsion, implique, en gardant les mêmes matériaux, d'en augmenter la masse et/ou l'encombrement. L'entraînement de masses importantes impose, toutes choses égales par ailleurs, une motorisation plus puissante qui, étant embarquée, est un facteur d'augmentation accrue des masses en mouvement.

La recherche d'une plus grande raideur en torsion de la traverse, sans augmentation de masse, est l'un des problèmes mal résolus de ce type de dispositifs.

En effet, de manière habituelle, la traverse comporte une ou deux poutres, parallèles à la direction y. Dans les structures à deux poutres, celles-ci s'étendent dans un même plan parallèle au plan des déplacements x-y. Elles sont reliées entre elles à leurs extrémités par des éléments d'entretoisement, appelés traînards, qui assurent en même temps le guidage du mouvement de la traverse sur les guides de direction x. Ces traînards sont situés, soit à la partie inférieure des poutres qui s'étendent au-dessus des guides, soit à la partie supérieure de ces poutres qui alors s'étendent sous les traînards, entre les guides de direction x.

La présente invention entend prendre en compte ces sollicitations dynamiques par une construction de la traverse de ce type de dispositif qui augmente sa raideur en torsion sans en augmenter la masse.

A cet effet, l'invention a pour objet un dispositif du type portique, comportant un bâti présentant deux guides parallèles horizontaux, sur lesquels sont montées à coulissement les extrémités d'une traverse mobile le long de ces guides horizontaux (mouvement x), un chariot monté coulissant le long de la traverse (mouvement y) et un coulisseau monté coulissant dans le chariot, perpendiculairement à la dimension longitudinale de la traverse, la traverse comportant deux poutres parallèles sur lesquelles prend appui le chariot, réunies à leurs extrémités par des flasques de liaison, équipés d'organes de coulissement coopérant avec les guides horizontaux. Selon l'invention, les axes d'inertie des poutres constitutives de la traverse sont situés dans deux plans différents, parallèles, au plan des guides du mouvement. Cette disposition renforce les aptitudes de la traverse à se moins déformer en torsion sous les contraintes dynamiques, qu'elle subit du fait des masses éloignées de son axe, sans augmentation de sa masse. Tout se passe en effet comme si la section de la traverse était plus importante, donc comme si la traverse était plus raide en torsion autour de l'axe y (l'axe longitudinal de la poutre), suite à l'augmentation du rayon de giration de la traverse dû au décalage en hauteur des axes des poutres.

Dans un mode de réalisation de l'invention, le décalage des axes d'inertie est obtenu par décalage dans l'espace de deux poutres identiques. Cette organisation permet de disposer sous la poutre haute et au-dessus de la poutre basse d'espaces pour le passage d'équipements tels que arbres de transmission ou chemins de cables. Ces équipements auparavant faisaient saillie au-delà de la largeur de la traverse et leur porte-à-faux devait être pris en charge par les traînards qui, à cet effet, devaient être allongés suivant l'axe des déplacements x. Des traînards raccourcis autorisent une course plus importante de la traverse sur un même bâti.

Dans une variante de réalisation, le décalage de ces axes d'inertie est obtenu par l'utilisation de poutres de sections différentes tout en conservant les masses.

D'autres caractéristiques et avantages de l'invention ressortiront de la description donnée ci-après d'un exemple de réalisation fait en référence aux dessins annexés dans lesquels

    – la figure 1 est une vue schématique en coupe longitudinale des dispositions générales d'un dispositif selon l'invention,

    – la figure 2 est une variante de réalisation de la figure 1.

Aux figures on a représenté schématiquement et partiellement un dispositif qui comporte une structure fixe de base 1 définissant de manière connue un plan horizontal 2, matérialisé par deux guides parallèles dont un seul 3 est visible. Ces deux guides s'étendent dans la direction x et peuvent être parcouru par un équipage mobile motorisé 4 dans les deux sens de cette direction. L'équipage mobile 4 est, sur cette figure, vu en coupe transversale et consiste essentiellement en une traverse capable donc d'être déplacée parallèlement à elle-même au moyen d'un moteur, par exemple embarqué, qui n'est pas représenté, et qui comporte de manière connue un arbre de sortie sur lequel sont calées deux roues dentées qui engrènent avec des crémaillères s'étendant le long de chaque guide. L'alimentation de ce moteur est réalisée au moyen de cables souples qui ne sont pas non plus représentés, et qui sont disposés, de manière connue dans un chemin de cables placé également le long de l'un des guides 3. Cette traverse est constituée par deux poutres 5a et 5b attelées entre elles, à chacune de leurs extrémités par un flasque de liaison 7 qui est pourvu à sa base de patins 8 d'appui et de coulissement sur les guides 3.

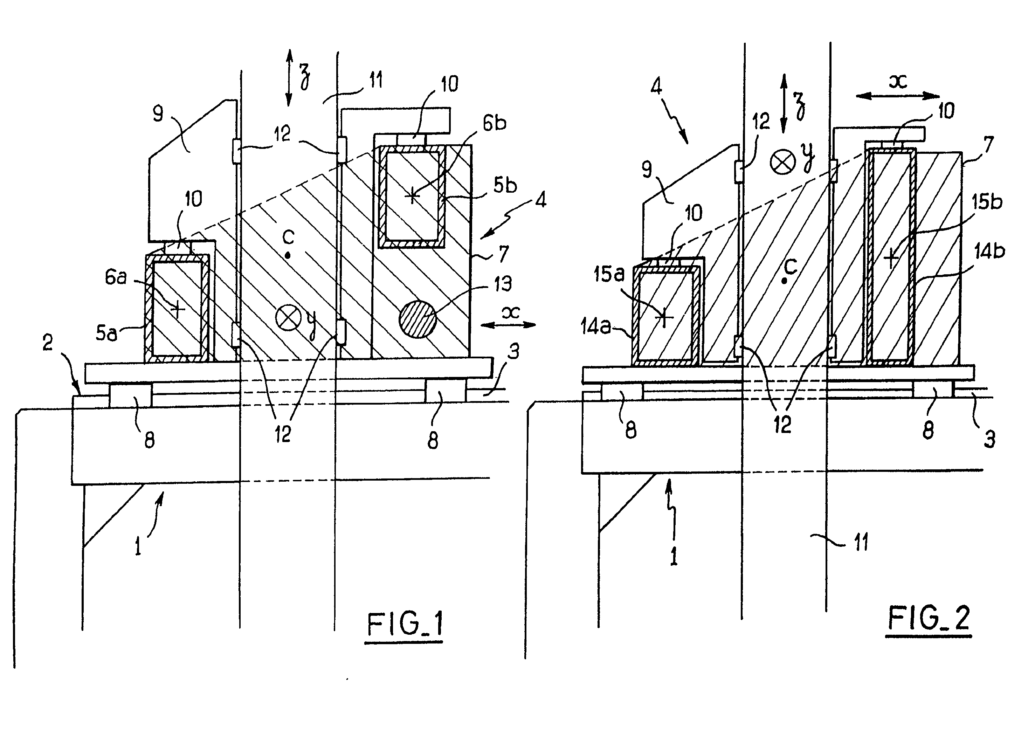

Selon l'une des caractéristiques principales de l'invention, comme cela ressort de la figure 1, les deux poutres 5a et 5b sont décalées en hauteur l'une par rapport à l'autre de sorte que leurs axes d'inertie 6a et 6b sont décalés et que la section virtuelle de la traverse 4, hachurée sur la figure, est plus importante que celle qui correspondrait à une traverse possédant deux poutres situées au même niveau. Ainsi, par l'augmentation du rayon de giration de la traverse (distance séparant les axes d'inertie 6a et 6b du point d'application C du couple de torsion) sans avoir augmenté la masse de la traverse ni avoir augmenté la dimension selon la direction x de cette traverse, on a augmenté sa raideur en torsion autour de la direction longitudinale de la traverse (celle y perpendiculaire au plan de la figure). Cette disposition est avantageuse, pour les raisons suivantes.

La traverse est un élément de l'équipage mobile 4 qui comprend en outre un chariot 9 capable d'être déplacé le long de la traverse dans la direction y. Les moyens moteurs de ce mouvement ne sont pas représentés à la figure, car ceux-ci sont connus en eux-mêmes et sont du même type que ceux d'entraînement de la traverse dans les deux sens de la direction x. On mentionnera simplement que les moyens de guidage du chariot 9 dans ses mouvements le long de la traverse (direction y) comprennent des patins 10 d'appui du chariot 9 sur chacune des poutres 5a et 5b, ou sur des éléments de guidage dont sont pourvues ces poutres.

L'équipage mobile comporte également un coulisseau 11 mobile par rapport au chariot 9 le long d'une direction verticale z, c'est-à-dire celle perpendiculaire aux deux précédentes. Les moyens d'entraînement de ce coulisseau sont également connus, peuvent être du même type que les précédents et ne sont pas non plus représentés. On a uniquement représenté sur cette figure les organes de guidage 12 de ce coulisseau dans le chariot 9 qui, compte-tenu de l'augmentation de la dimension verticale de la traverse, peuvent être relativement écartés les uns des autres, ce qui est avantageux car plus l'espacement des deux zones d'un tel guidage est important, meilleure est la qualité du guidage.

Du fait que chariot et coulisseau sont des organes possèdant une certaine masse, les mouvements suivant x de l'équipage mobile induisent, lors des accélérations ou des décélérations des contraintes dans la traverse qui se traduisent par des déformations de celle-ci. Ces déformations doivent être les plus faibles possibles pour ne pas influencer la précision des déplacements commandés ou la précision de leur détection par des capteurs solidaires de la structure fixe. La neutralisation de l'effet de ces masses, qui sont situées au-dessus de la traverse ne peut pas s'envisager sous forme d'un équilibrage, compte-tenu du caractère dynamique de ces contraintes et de la recherche d'une masse embarquée minimale, pour notamment éviter l'embarquement de moteurs trop puissants donc lourds et consommateurs d'une plus grande énergie. On comprend donc que l'invention est une réponse optimale au problème de la déformation en torsion de la traverse.

L'invention possède, du fait de cette géométrie particulière de la traverse d'autres avantages, notamment au niveau de l'encombrement dans le sens x. En effet, l'espace disponible au-dessus de la poutre basse et celui existant en dessous de la poutre haute constituent des endroits pour loger des éléments fonctionnels du dispositif. On a représenté à la figure en 13, l'arbre de transmission, s'étendant entre un moteur qui serait fixé à l'un des flasques de liaison des poutres, et les organes d'entraînement de l'équipage mobile 4 le long de la direction x. Dans les dispositifs connus avec une traverse à deux poutres, cet arbre est nécessairement situé à l'extérieur des poutres puisque l'espace correspondant à leur écartement est occupé par le coulisseau. De même, les chemins de cables pour l'alimentation des organes moteurs du chariot et ceux du coulisseau peuvent être, au moins en partie, logés dans ces espaces libres au-dessus ou en dessous des poutres 5a et 5b.

A la figure 2, on a représenté une variante de réalisation dans laquelle la traverse comprend deux poutres 14a et 14b, de sections différentes mais de masses équivalentes aux poutres mises en oeuvre dans la figure 1. L'une des poutres 14b étant plus haute que la poutre 14a, les axes d'inertie 15a et 15b sont décalés de la même manière que dans la figure précédente, avec le même effet sur la résistance en torsion que dans le cas précédent.

**Revendications**

1 - Dispositif du type portique, comportant un bâti (1) présentant deux guides (3) parallèles horizontaux, sur lesquels sont montées à coulissement les extrémités d'une traverse mobile (4) le long de ces guides horizontaux (mouvement x), un chariot (9) monté coulissant le long de la traverse (mouvement y) et un coulisseau (11) monté coulissant dans le chariot (9), perpendiculairement à la dimension longitudinale de la traverse (4), la traverse comportant deux poutres parallèles (5a,5b), réunies à leurs extrémités par des flasques (7) de liaison, équipés d'organes (8) de coulissement coopérant avec les guides horizontaux (3), caractérisé en ce que les axes d'inertie (6a,6b) des poutres (5a,5b) constitutives de la traverse (4) sont situés dans deux plans différents, parallèles au plan des guides (3) du mouvement x.

2 - Dispositif selon la revendication 1, caractérisé en ce que les poutres (5a,5b) sont de sections identiques et sont décalées verticalement l'une par rapport à l'autre.

3 - Dispositif selon la revendication 1, caractérisé en ce que les poutres (14a,14b) sont de sections différentes, dont les axes d'inertie ( 15a, 15b) sont situés dans des plans différents, parallèles au plan défini par les guides (3).

## FIG_1

## FIG_2

EP 0 458 686 A1

Office européen
des brevets

**RAPPORT DE RECHERCHE EUROPEENNE**

Numero de la demande

EP    91 40 1282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3444984 (H. DEGENHARDT ET AL)<br>* le document en entier * | 1, 3 | B25J9/02<br>B23Q1/18 |
| X | EP-A-346816 (NISSAN MOTOR CO., LTD.)<br>* colonne 15, ligne 19 - colonne 16, ligne 23; figures 2, 9, 14a * | 1-3 | |
| A | US-A-2660096 (H. E. MORTON)<br>* colonne 3, ligne 38 - colonne 4, ligne 22; figures 1-6 * | 1-3 | |

**DOMAINES TECHNIQUES RECHERCHES (Int. Cl.5)**

B25J
B23Q
B66C

Le présent rapport a été établi pour toutes les revendications

| Lieu de la recherche | Date d'achèvement de la recherche | Examinateur |
|---|---|---|
| BERLIN | 19 AOUT 1991 | CUNY, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P0402)